# EUROPEAN PATENT APPLICATION

(11) **EP 2 790 128 A2**
(43) Date of publication of application: **15.10.2014**
(21) Application number: 14162695.2
(22) Date of filing: 31.03.2014
(51) Int. Cl.: G06K 9/00

(54) **Method of managing image and electronic device thereof**

(30) Priority: 12.04.2013 KR 20130040525
(71) Applicant: Samsung Electronics Co., Ltd., Suwon-si Gyeonggi-do 443-742 (KR)
(72) Inventor: Choi, Bo-Kun, Seoul (KR); Kim, Han-Jib, Gyeonggi-do (KR); Yoon, Pil-Joo, Seongnam-si (PN); Hwang, Soo-Ji, Gyeonggi-do (KR)
(74) Representative: Nederlandsch Octrooibureau

(57) **Abstract**

A system processes an image in an electronic device, by determining whether a text character is included in an image and extracting the determined text character from the image. The extracted text character is stored in association with the image.

## Description

### BACKGROUND

### 1. Technical Field

The present invention relates generally to an electronic device for managing image processing in an electronic device.

### 2. Description of the Related Art

Known electronic devices acquire images, and store and manage the acquired images and information associated with the image. For example, an electronic device may acquire an image captured through a camera, and store and manage the acquired image and EXchangeable Image File format (EXIF) information associated with the image. As another example, the electronic device may acquire an image received from another electronic device, and store and manage the acquired image and EXIF information associated with the image.

Known electronic devices employ an optical characteristic recognition (OCR) function for extracting a character included in an image. The OCR extracts characters, symbols, markers, for example, included in an image using an optical means, and converts them into a computer-readable text. The OCR function includes a method for extracting characters without using optical means by pattern matching and structure analysis. Different character recognition methods may be used based on the type of elements to be extracted. For example, a pattern matching method may typically be used to extract a printed character and a structure analysis method may be typically used to extract a handwritten character.

Known electronic devices extract a character included in an image and manages the extracted character and the image respectively. Known systems render it difficult to manage character information and image information in an integrated and organized manner. For example, in a known electronic device, extracted character information and an associated image are managed separately, impairing maintenance storage and access to information particularly when an image is copied or deleted, for example.

### SUMMARY

A system identifies whether a character is included in an image and manages an image in conjunction with an associated character extracted from the image. A system stores an indicator flag indicating that a character is included in an image as well as the image and character information extracted from the image together in an electronic device and distinguishes images from which characters are extracted from other images. A character as used herein comprises one or more text characters or symbols.

A system processes an image in an electronic device, by determining whether a text character is included in an image and extracting the determined text character from the image. The extracted text character is stored in association with the image.

In a feature of the invention the system receives the image from a camera, wherein the text character comprises a text string including a plurality of at least one of, text characters and symbols, and determining whether the text character is included in the image comprises: checking a focus region of the camera in the image; and determining whether a text character is included in the checked focus region. Further, extracting the text character included in the image comprises: checking a size of the text character included in the image; and in response to the size of the checked text character being larger than a predetermined text character size, extracting the text character. In one embodiment, in response to the checked text character being two or more text characters having different sizes, the system extracts a text character having a largest size of the text characters.

In a further feature, the system stores the extracted text character in association with the image by storing an indicator flag indicating that the text character is included in the image or a specific region of the image in association with the image. The system renames a file name of the image to be distinguishable from an image excluding the text character and/or stores the image and another image excluding the text character, in different folders to distinguish the different images. The system receives an input text character for image search; determines whether the received text character is identical to the stored extracted text character; and in response to the received text character being identical to the stored extracted text character, displaying at least one image in association with the stored extracted text character.

In yet another feature, an electronic device processes an image, comprising, at least one processor; a touch sensitive display; a memory; and at least one program stored in the memory and configured to be executable by the at least one processor. The program includes executable instructions for: determining whether a text character is included in an image; extracting the determined text character from the image; and storing the extracted text character in association with the image. A non-transient, computer-readable recording medium stores one or more programs comprising executable instructions for causing, in response to being executed by an electronic device, the electronic device to perform the method of claim 1.

### BRIEF DESCRIPTION OF THE DRAWINGS

The above objects, features and advantages of the present invention will become more apparent from the following detailed description when taken in conjunction with the accompanying drawings in which:
FIG. 1A shows an electronic device for managing an image according to invention principles;
FIG. 1B shows a processor for managing an image according to invention principles;
FIG. 2 shows a flowchart of a process of managing an image including character information in an electronic device according to invention principles;
FIG. 3 shows a flowchart of a process of extracting a character included in an image and storing the extracted image along with the image in an electronic device according to invention principles;
FIG. 4 shows an indicator flag indicating that a character is included in an image and is stored behind an EOI (End Of Image) marker in an electronic device according to invention principles;
FIG. 5 shows an EOI marker in a header of a JPEG image in an electronic device according to invention principles;
FIGS. 6A and 6B show displayed images illustrating determination of whether character information exists in an image in an electronic device according to invention principles;
FIG. 7 shows a displayed image indicating extracting a character according to sizes of characters included in an image in an electronic device according to invention principles; and
FIG. 8 shows a displayed image illustrating storage of an image and a character extracted from the image together according to sizes of characters included in an image in an electronic device according to invention principles.

### DETAILED DESCRIPTION

Exemplary embodiments are described herein below with reference to the accompanying drawings. In the following description of the exemplary embodiments, detailed descriptions of well-known functions or configurations are omitted since they would unnecessarily obscure the subject matter. The terms used herein should be understood based on the descriptions made herein. The term "extract" as used herein in "extracting" a determined text character, comprises replicating a text character in an image for storage, for example. Further a "character" as used herein comprises at least one text character or symbol.

In the following description, examples of the electronic device may include a mobile communication terminal, a smart phone, a tablet PC, a digital camera, an MP3 player, a navigation device, a laptop computer, a netbook, a computer, a television, a refrigerator, and an air conditioner, which are capable of storing an image.

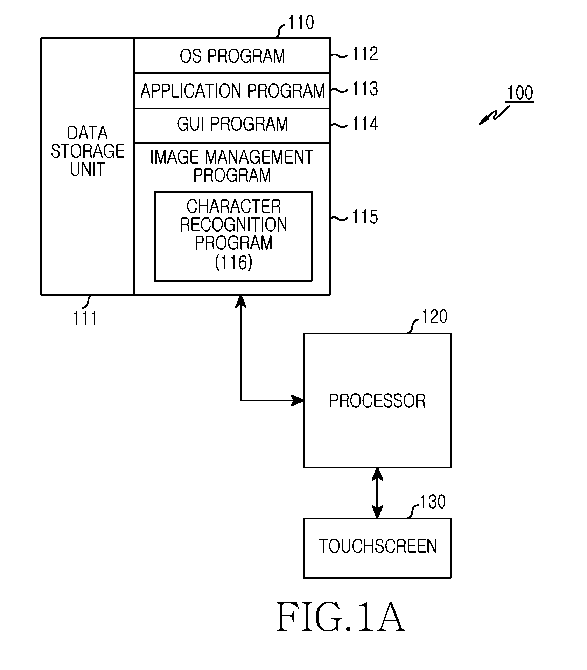

FIG. 1A shows electronic device 100 for managing an image including a memory 110, a processor 120 and a touchscreen 130. The memory 110 may comprise a plurality of memory devices and the processor 120 may comprise a plurality of processors. The memory 110 includes a data storage unit 111, an operating system (OS) program 112, an application program 113, a graphic user interface (GUI) program 114, an image management program 115, and a character recognition program 116. Also, a program is a software component representing a set of machine executable instructions and may be referred to as an instruction set or module. The memory 110 may store one or more programs including machine executable instructions. The data storage unit 111 stores data generated during the performance of a function corresponding to the program stored in the memory 110 and may store an image received from a server or another electronic device and an image captured through a camera (not illustrated). In addition, the data storage unit 111 may store EXchangeable Image File format (EXIF) information respectively for stored images.

The data storage unit 111 may store an image including a character and an image excluding the character with indicators distinguishing the different images based on presence or absence of the character. The data storage unit 111 may store an image with an indicator indicating a character has been extracted and an image with an indicator indicating the image has not been processed for such extraction. For example, the data storage unit 111 may store an image including a character in a first folder and an image exclusive of the character in a second folder. The data storage unit 111 may store the image including a character by adding a specific word in front of the name of the acquired image (for example, character_XXX.JPEG). The data storage unit 111 may store the image including no image by using the name of the acquired image as it is (for example, XXX.JPEG).

The OS program 112 (for example, WINDOWS, LINUX, Darwin, RTXC, UNIX, OS X, or an embedded OS such as VxWorks) includes various software components for controlling general system operations. For example, general system operation controls may include memory control/management, storage hardware (device) control/management, and power control/management. The OS program 112 also performs a function for enabling smooth communication between various hardware components (devices) and software components (programs). The application program 113 includes a browser application, an e-mail application, a message application, a word processing application, an address book application, a widget application, a digital right management (DRM) application, a voice recognition application, a voice replication application, a position determining function application, a location-based service (LBS) application, and a telephone application.

The graphic user interface program 114 includes at lease one software component for providing a graphic user interface between a user and the electronic device 100 on the touchscreen 130. The GUI program 114 includes instructions for displaying information about a character extracted from an acquired image when character information is included in the acquired image. For example, when characters of "Samsung" are extracted from an acquired image, the GUI program 114 may display a pop-up message window indicating that characters of "Samsung" are extracted from the image. In addition, when an image search is performed based on a character, the GUI program 114 may display an image including the corresponding character. For example, when an image search is performed for an image including characters of "Samsung", the GUI program 114 may display an image and a thumbnail picture of the image including the characters of "Samsung". When there are a plurality of images each including the characters, the GUI program 114 may display a list of images each including the characters, or the thumbnails of the images.

The image management program 115 includes a character recognition program 116 and program 115 may acquire an image received from a server or another electronic device and an image captured through a camera (not illustrated). A method of capturing an image includes acquiring an image by capturing the image through the camera and acquiring an image by receiving a preview screen through the camera in real time. In addition, when an image is acquired, the image management program 115 checks an indicator flag in the acquired image. The indicator flag may be a flag representing whether character information is included in the acquired image and program 115 may check the indicator flag in order to identify whether character information is stored along with a corresponding image when the image is acquired.

In addition, the image management program 115 determines whether a character exists in the acquired image when the character information is not stored along with the acquired image. As a result of the checking of the indicator flag of the acquired image and determination that the character information is not stored along with the corresponding image, the image management program 115 may check the focus information of the corresponding image and determine whether a character exists in a corresponding focus region. For example, when, as a result of checking of the focus region of the acquired image, a character exists in the focus region, program 115 may classify the corresponding image as an image including a character. As another example, when, as a result of checking of the focus region of the acquired image, a character does not exist in the focus region, program 115 may classify the corresponding image as an image excluding the character. In this case, the size of the focus region may be selected or changed by a user or the system.

In addition, when the character included in the image is extracted by the character recognition program 116, program 115 may store the extracted character information and the indicator flag indicating that the extracted character is stored along with the corresponding image along with the corresponding image. In this case, the indicator flag may be stored behind the EOI (End Of Image) marker of the corresponding image or in a predetermined region of EXIF information.

In addition, program 115 may display an image including a corresponding search term. The image being selected from images individually including a character at the time of performing image search based on a character included in an image. For example, when an image search is performed based on characters of "Samsung", program 115 may display a first image including the characters of "Samsung" selected from images each including the characters. When program 115 determines that a character exists in an image, the character recognition processor 116 may extract character information in a corresponding image using a known method such as a known OCR function and use of known methods, such as pattern matching, structure analysis, feature matching, and stroke analysis.

Although not illustrated, the processor 120 may include at least one processor and a peripheral interface. In addition, the processor 120 executes a specific program (instruction set) stored in the memory 110 and performs a plurality of specific functions corresponding to the program. The touchscreen 130 is a touch-sensitive display and provides an interface for touch input/output between the electronic device 100 and the user. The touchscreen 130 comprises a medium that detects a touch (or contact) through a touch sensor (not illustrated), transmits data representing the detected touch input to the electronic device 100, and visually provides an output from the electronic device 100 to the user such as text, graphics and video in response to the touch input.

The touchscreen 130 includes a touch-sensitive surface that accepts user touch input, and detects user touch input based on a haptic contact, a tactile contact, or a combination thereof. For example, a touch-detected point on the touchscreen 130 corresponds to the width of a finger used for contact with the touch sensitive surface. In addition, the touchscreen 130 detects a contact of an external device, such as a stylus pen, through the touch sensitive surface. The detected contact is converted into data representing interaction with user-interface objects (e.g., one or more soft keys) that are displayed on the touchscreen. The touchscreen 130 provides an interface for touch input/output between the electronic device 100 and the user. Specifically, the touchscreen 130 comprises a medium that transmits the user touch input to the electronic device 100 and visually provides an output from the electronic device 100 to the user. The touchscreen 130 may use various display devices, such as an LCD (liquid crystal display), an LED (Light Emitting Diode), an LPD (light emitting polymer display), an OLED (Organic Light Emitting Diode), an AMOLED (Active Matrix Organic Light Emitting Diode), or an FLED (Flexible LED). The touchscreen 130 is not limited to touchscreens using these display devices. In addition, the touchscreen 130 may detect the start, movement, stop or end of a contact on a touch sensitive surface by using different touch detection (or sensing) methods such as capacitive detection, resistive detection, infrared detection, and surface acoustic wave (SAW) detection.

In addition, when an image search is performed for a character, the touchscreen 130 may display an image including the corresponding character. For example, when an image search is performed for an image including characters of "Samsung", the touchscreen 130 may display an image including the characters of "Samsung". In this case, when there is a plurality of images each including corresponding characters, the touchscreen 130 may display a list of images each including the characters or the thumbnails of the images. In this case, when there is no image found by a search including corresponding characters, the touchscreen 130 may display a pop-up message window indicating that there is no image including the characters.

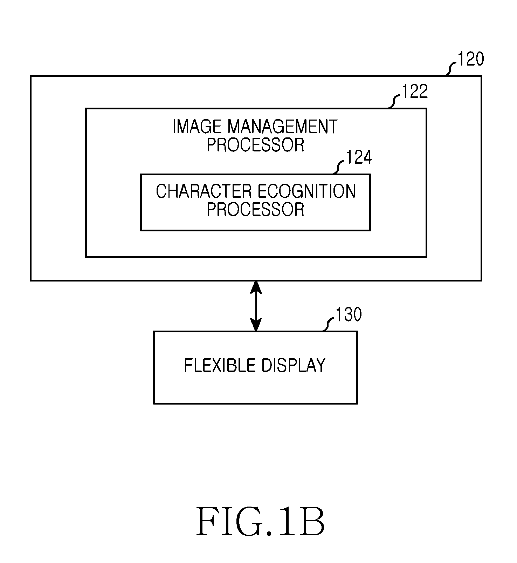

FIG. 1B shows processor 120 for managing an application including an image management processor 122 and processor 122 includes a character recognition processor 124. Processor 122 may acquire an image received from a server or another electronic device and an image captured through a camera (not illustrated). The image management processor 122 checks an indicator flag associated with an acquired image to identify whether the character information is stored along with a corresponding image when the image is acquired. The indicator flag may be a flag representing whether character information is included in the acquired image.

In addition, processor 122 determines whether a character exists in the acquired image when the character information is not stored along with the acquired image. In response to checking the indicator flag of the acquired image and determining that the character information is not stored along with the corresponding image, processor 122 may check the focus information of the corresponding image and determine whether a character exists in a corresponding focus region. For example, when, as a result of checking of the focus region of the acquired image, a character exists in the focus region, the image imaging processor 122 may classify the corresponding image as an image including a character. In response to checking of the focus region of the acquired image and determining a character does not exist in the focus region, the imaging processor 122 may classify the corresponding image as an image excluding the character. In this case, the size of the focus region may be selected and changed in response to command by the system or a user.

In response to extraction of the character included in the image by the character recognition processor 124, processor 122 may store the extracted character information and the indicator flag indicating that the extracted character is stored along with the corresponding image. The indicator flag may be stored behind the EOI (End Of Image) marker of the corresponding image or in a predetermined region of EXIF information.

Processor 122 may display at least one image in response to searching for characters in the image at the time of searching. Specifically, processor 122 may display an image including a corresponding search term selected from images individually including a character, at the time of searching for an image including the character. For example, when image search is performed based on characters of "Samsung", processor 122 may display a first image including the characters of "Samsung" selected from images individually including the characters. In response to processor 122 determining that a character exists in an image, the character recognition processor 124 may extract character information in the corresponding image using a known method such as an OCR method and known methods, such as pattern matching, structure analysis, feature matching, and stroke analysis, for example.

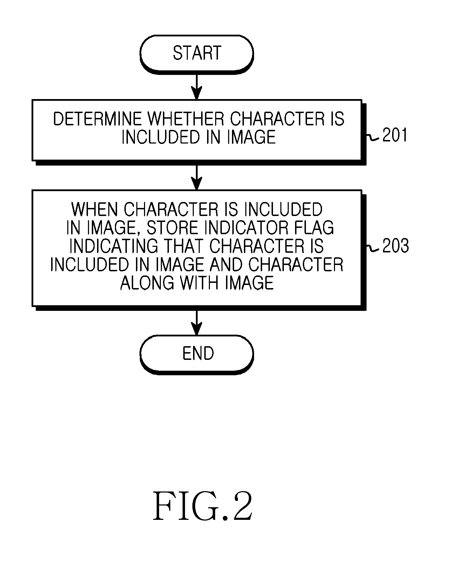

FIG. 2 shows a flowchart of a process of managing an image including character information in an electronic device. In step 201, the electronic device 100 may identify whether a character is included in an image by comparison of character shape with predetermined stored characters and symbols and identifying a match exists using rotation, translation and scaling operations in a known matching method. The electronic device 100 may identify whether a character is included in a corresponding image based on the focus information of an acquired image but is not limited to the focus information and may use other known character identification methods. In step 203, in response to a determination a character is included in an image, the electronic device 100 may store an indicator flag indicating that the character is included in the image and the character in association with the image. Device 100 extracts the character, and stores and manages the indicator flag indicating that the character is included in the image and the character in association with the image.

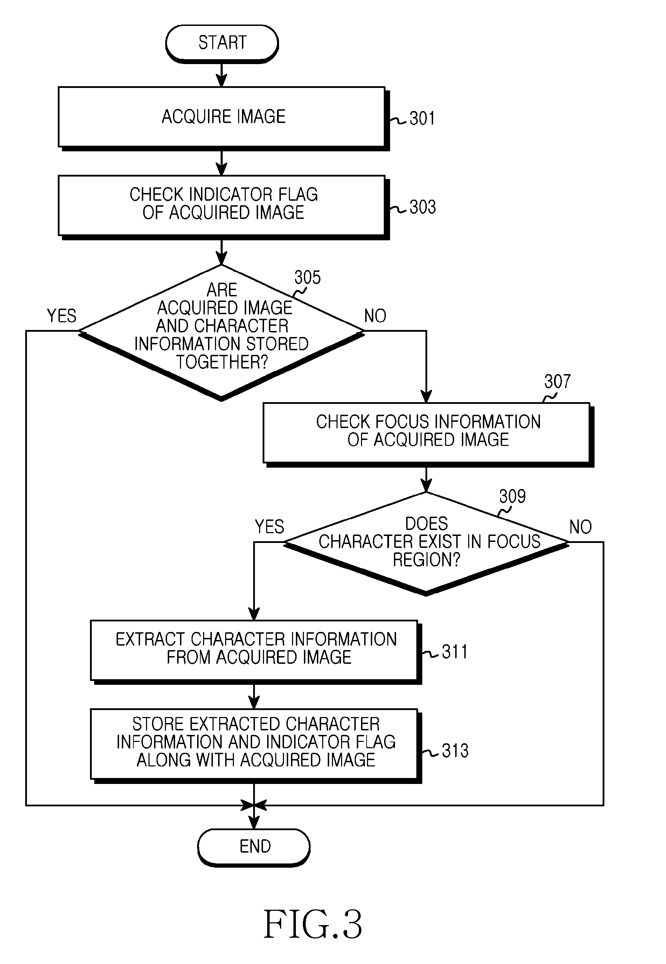

FIG. 3 shows a flowchart of a process of extracting a character included in an image and storing the extracted character along with the image in an electronic device 100.

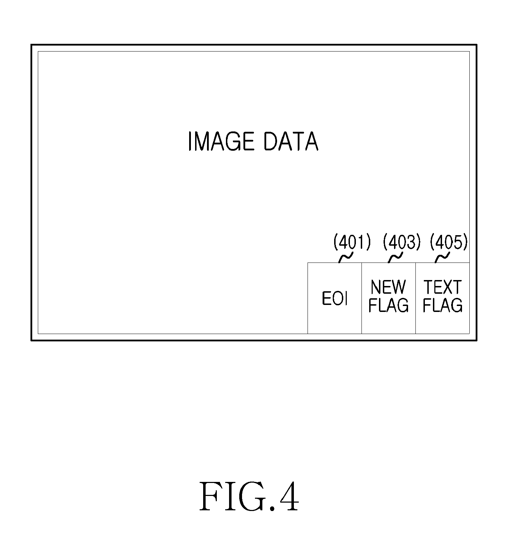

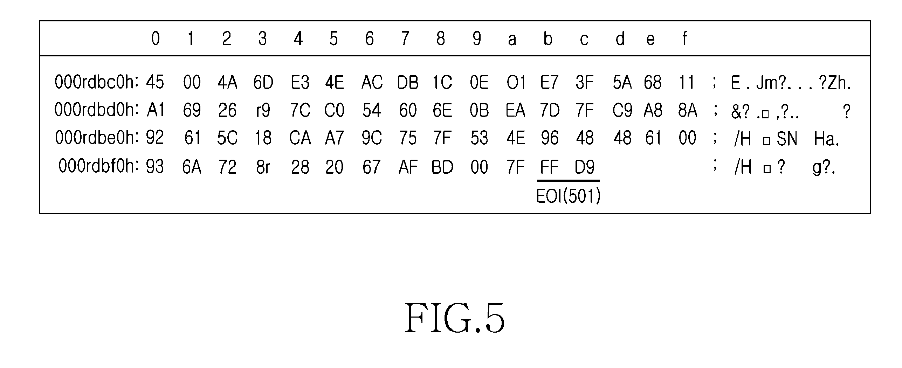

In step 301, the electronic device 100 acquires an image received from a server or another electronic device and an image captured through a camera (not illustrated) or received in real time through a camera preview screen. In step 303, the device 100 checks the indicator flag of the acquired image which may be stored behind an EOI (End Of Image) marker, for example, of the acquired image or in a predetermined region of EXIF information. In step 305, the device 100 identifies whether character information is stored in association with the acquired image. For example, the device 100 may check the indicator flags 403 and 405 (FIG. 4) located behind the EOI marker 401 of the acquired image to identify whether a character is included in a corresponding image based on the focus information of an acquired image. In this case, indicator flags are classified into a first indicator flag 403 indicating it has been identified that character information exists and a second indicator flag 405 indicating that character information exists. According to design requirements, the first indicator flag 403 and the second indicator flag 405 are managed in an integrated manner. In addition, since the position of an EOI marker varies depending on image format, the storage position of an indicator flag may also vary depending on the format of an acquired image. For example, when the acquired image is a JPEG (joint photographic coding experts group) image, the indicator flag may be located behind the EOI marker of the JPEG image, that is, "FF D9" 501 (FIG. 5). In response to a determination character information is stored along with the acquired image, the device 100 ends the process according to the embodiment of the present invention.

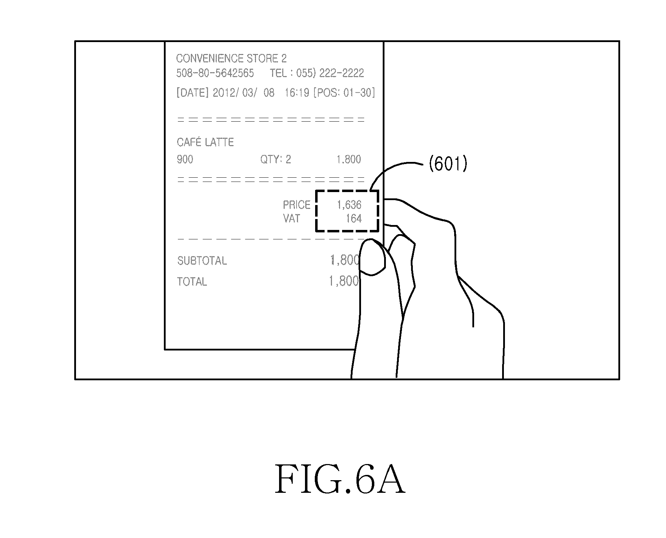

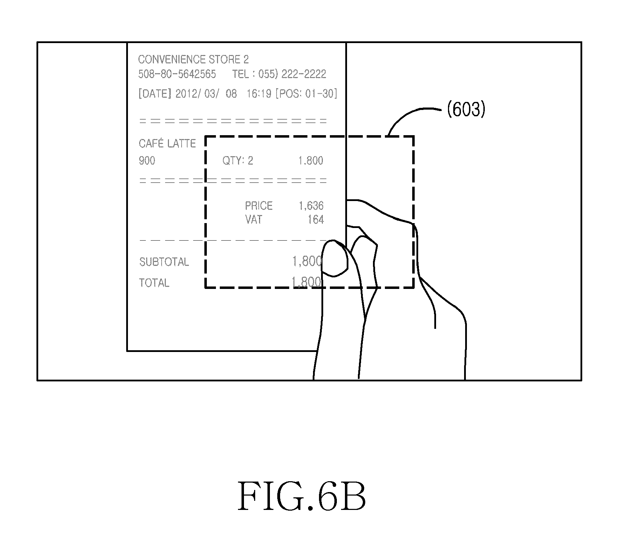

In response to a determination character information is not stored in association with the acquired image in step 305, the electronic device checks the focus information of the acquired image in step 307 and determines whether a character exists in the focus region in step 309. For example, the device 100 checks the focus region 601 of the acquired image as illustrated in FIG. 6A, and determines whether a character exists in the focus region 601. As another example, the device 100 checks the enlarged focus region 603 (FIG. 6B) of the acquired image, and determines whether a character exists in the focus region 603. When the image acquired in step 301 is an image acquired through a camera included in the device 100, the device 100 proceeds to step 307 without performing steps 303 and 305. In step 307, the device 100 may check the focus information of the image acquired through the camera and perform subsequent steps.

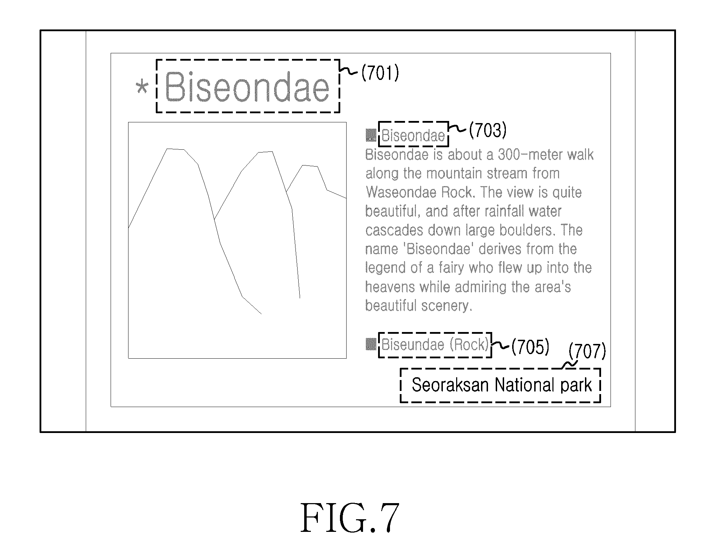

In response to a determination a character exists in the focus region, the device 100 determines that the image is an image including a character and extracts character information from the acquired image in step 311. Device 100 may extract the character information that satisfies a specific condition of a plurality of different characters, symbols or text strings existing in the acquired image. For example, the device 100 may check the font size of the characters existing in the image as illustrated in FIG. 7 and extract characters 701, 703, 705 and 707 having a font size larger than a predetermined font size of the checked characters. As another example, when characters having different sizes exist in an image, the device 100 may extract characters having a relatively large size among the characters having different sizes. In this case, the device 100 may extract a character having the largest size from the characters having different sizes.

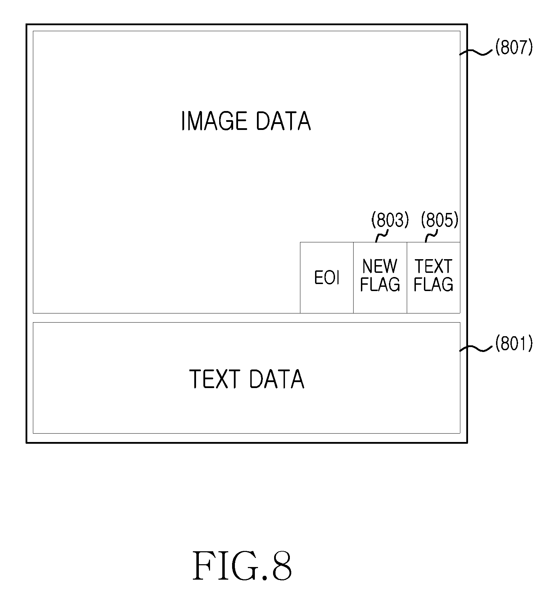

In step 313, the device 100 stores the extracted character information and the indicator flag in association with the acquired image. For example, the device 100 may manage the acquired image along with the character image extracted from the image by storing the extracted character information 801 and the indicator flags 803 and 805 in association with the image data 807 as illustrated in FIG. 8. The indicator flags are classified into the first indicator flag 803 indicating it has been identified that character information exists and the second indicator flag 805 indicating that character information exists. The first indicator flag 803 and the second indicator flag 805 are managed in an integrated manner. In addition, the device 100 may store an image from which character information is extracted and an image from which character information is not extracted, so the different images are distinguishable from each other. For example, the device 100 may store an image from which character information is extracted and an image from which character information is not extracted, so the different images are distinguishable from each other by renaming the file name of the image from which character information is extracted. As another example, the device 100 may store an image from which character information is extracted and an image from which character information is not extracted in different folders separately.

The computer-readable medium may be a machine-readable storage medium, a machine-readable storage substrate, a memory device, a composition of material influencing a machine-readable stream, or a combination thereof. For example, the term "data processing apparatus" includes all apparatus, devices, and machines for processing data, such as programmable processors, computers, or multiple processors or computers. The apparatuses may include, in addition to hardware, codes that create an execution environment for a relevant computer program, such as codes that constitutes processor firmware, a protocol stack, a database management system, an operating system, or a combination thereof.

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

The above-described embodiments can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process steps herein may be performed automatically or wholly or partially in response to user command. An activity (including a step) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A method of processing an image in an electronic device, comprising:
determining whether a text character is included in an image;
extracting the determined text character from the image; and
storing the extracted text character in association with the image.

2. The method of claim 1, further comprising receiving the image from a camera,
wherein the text character comprises a text string including a plurality of at least one of, text characters and symbols, and determining whether the text character is included in the image comprises:
checking a focus region of the camera in the image; and
determining whether a text character is included in the checked focus region.

3. The method of claim 1, wherein extracting the text character included in the image comprises:
checking a size of the text character included in the image; and
in response to the size of the checked text character being larger than a predetermined text character size, extracting the text character.

4. The method of claim 1, wherein extracting the text character included in the image comprises:
checking a size of the text character included in the image; and
in response to the checked text character being two or more text characters having different sizes, extracting a text character having a largest size of the text characters.

5. The method of claim 1, wherein storing the extracted text character in association with the image comprises storing an indicator flag indicating that the text character is included in the image in association with the image.

6. The method of claim 1, wherein storing an indicator flag indicating that the text character is included in the image in association with the image comprises storing an indicator flag indicating that the text character is included in a specific region of the image.

7. The method of claim 1, wherein storing the extracted text character in association with the image comprises renaming a file name of the image to be distinguishable from an image excluding the text character.

8. The method of claim 1, wherein storing the extracted text character in association with the image comprises storing the image and another image excluding the text character, in different folders to distinguish the different images.

9. The method of claim 1, further comprising:
receiving an input text character for image search;
determining whether the received text character is included in the stored extracted text character; and
if the received text character is included in the stored extracted text character, displaying at least one image in association with the stored extracted text character.

10. An electronic device for processing an image, comprising:
at least one processor;
a touch sensitive display;
a memory; and
at least one program stored in the memory and configured to be executable by the at least one processor,
wherein the program includes executable instructions for:
determining whether a text character is included in an image;
extracting the determined text character from the image; and
storing the extracted text character in association with the image.

11. The electronic device of claim 10, further comprising a camera, wherein the program further includes executable instructions for:
receiving the image from a camera,
checking a focus region of the camera in the image; and
determining whether a text character is included in the checked focus region.

12. The electronic device of claim 10, wherein the program further includes executable instructions for:
checking a size of the text character included in the image; and
in response to the size of the checked text character being larger than a predetermined text character size, extracting the text character.

13. The electronic device of claim 10, wherein the program further includes executable instructions for:
checking a size of the text character included in the image; and
in response to the checked text character being two or more text characters having different sizes, extracting a text character having a largest size of the text characters.

14. The apparatus of claim 10, wherein the apparatus arranged to implement a method of one of claims 5 to 9.

15. A non-transient, computer-readable recording medium storing one or more programs comprising executable instructions for causing, in response to being executed by an electronic device, the electronic device to perform the method of claim 1.
